# EUROPEAN PATENT APPLICATION

(11) **EP 1 494 010 A1**
(43) Date of publication of application: **05.01.2005**
(21) Application number: 04253452.9
(22) Date of filing: 10.06.2004
(51) Int. Cl.: G01N 21/90, G01N 21/88, G01N 21/55

(54) **Apparatus for inspecting the heel code of a container**

(30) Priority: 30.06.2003 US 610423
(71) Applicant: Emhart Glass S.A., 6330 Cham (CH)
(72) Inventor: Diehr, Richard D., Horseheads New York 14845 (US)
(74) Representative: Warren, Anthony Robert

(57) **Abstract**

A machine is provided for inspecting the heel code of a container such as a bottle (10). The bottle is supported vertically at an inspection location and a camera (24) having an imaging area is located vertically beneath the bottle. A horizontally disposed annular ring light (17) directs an annular beam of light upwardly at a heel code of the bottle, and light reflected from the heel code is reflected, by an annular concave surface (16) located concentrically below the annular ring light (17), to the imaging area of the camera (24).

## Description

The present invention relates to machines which inspect containers such as bottles for defects, and more particularly to a system for inspecting the heel code at the bottom of a bottle.

Machines for inspecting glass bottles correlate defects with mold cavity so that an operator will know where a defective bottle was made and can promptly adjust the bottle making process to eliminate the problem at that mold. Mold data in the form of raised dots of glass are often present on the outer wall of the bottle just above the bottom of the bottle (a heel code). These glass dots generally are located in a common horizontal plane.

It is an object of the present invention to provide a machine for inspecting glass containers which can read a heel code on a container.

According to the present invention, there is provided a machine for inspecting the heel code of a container as defined in claim 1.

The present invention will now be described with reference to the accompanying drawings which illustrate a presently preferred embodiment incorporating the principles of the invention, and in which:
Figure 1 is an elevational schematic view of a system for inspecting the bottom of a bottle for defects; and
Figure 2 is a schematic showing of the camera image of a heel code.

A bottle 10 is supported at an inspection station by opposed pairs of drive belts 12. Mounted on the machine frame at this location is a mirror 14 having an annular conical reflecting surface 16. Secured on top of this mirror and having a matched opening is an annular ring light 17 which has a light support 18 to which are mounted numerous evenly spaced individual LED's 20. As can be seen, the LED's may be angled upwardly to direct light at one or more raised bumps of glass 22 which generally are found in a common horizontal plane and which define the heel code.

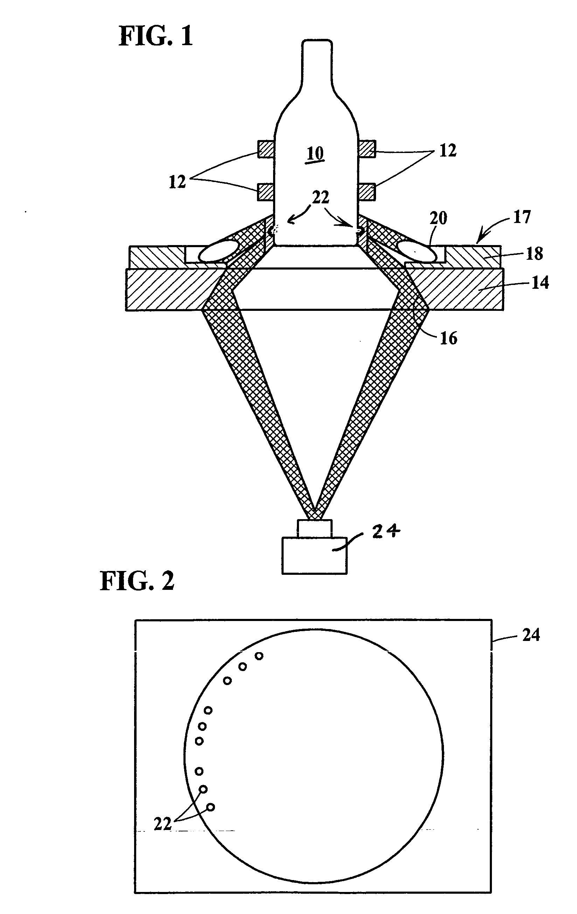

Light from the ring light 17 is reflected off the bumps 22 to the conical reflecting surface of the mirror, and is redirected by the conical reflecting surface to the image area of the camera 24. The camera image can be stored and later evaluated to determine the heel code. Figure 2 shows the raised glass bumps 22 defining the heel code as they would appear on the imaging area on plane of the camera 24.

## Claims

1. A machine for inspecting the heel code of a container, comprising
means for supporting a container vertically at an inspection location,
a camera having an imaging area vertically beneath a container supported at the inspection location,
a horizontally disposed annular ring light for directing an annular beam of light upwardly at a heel code of a supported container,
a mirror having an annular concave surface located concentrically below said annular ring light for receiving light reflected from the heel code of a supported container and reflecting the light to the imaging area of said camera.

2. A machine for inspecting the heel code of a container according to claim 1, wherein said annular ring light comprises a plurality of L.E.D.'s selectively aimed at said heel code.

3. A machine for inspecting the heel code of a bottle according to claim 1 or 2, wherein said annular ring light and said mirror are adjacent.
